# EUROPEAN PATENT APPLICATION

(11) **EP 2 942 892 A1**
(43) Date of publication of application: **11.11.2015**
(21) Application number: 14305675.2
(22) Date of filing: 09.05.2014
(51) Int. Cl.: H04L 1/00, H04B 17/00, H04J 11/00

(54) **Method, user device, base station and computer-readable medium for transmitting propagation channel quality indicator**

(71) Applicant: ALCATEL LUCENT, 92100 Boulogne-Billancourt (FR)
(72) Inventor: Baker, Matthew, SWINDON, Western Isles SN5 7DJ (GB); Wong, Shin Horng, SWINDON, Western Isles SN5 7DJ (GB); Zhang, Min, SWINDON, Western Isles SN5 7DJ (GB); Hu, Teck, Melbourne, FL Florida 32940 (US); Ye, Sigen, MURRAY HILL, NJ New Jersey 07974-0636 (US)
(74) Representative: Therias, Philippe

(57) **Abstract**

A method for transmitting information representative of a quality of a propagation channel between at least two devices of telecommunication network, the said method comprises a step of deriving a first channel quality indicator, a step of deriving a second channel quality indicator. This step is realized by using a look-up table associated modulation scheme and/or transport block size and/or signal to interference plus noise ratio with target error rate and by comparing an actual error rate with the target error rate. The method also comprises a step of transmitting the first and/or second channel quality indicator.

## Description

### FIELD OF INVENTION

The present subject matter relates to the transmission of information representative of the quality of a propagation channel between at least two devices of telecommunication network.

### BACKGROUND

The information representative of the quality of a propagation channel is also known by the acronym CQI that stands for Channel Quality Indicator. In some specifications such as the 3GPP specifications this CQI corresponds to a Modulation and Coding Scheme (MCS). Each MCS is a combination of some of the parameters used to transmit the wave form (constellation, modulation, parameters of the channel coding, transport block size etc.). In some specifications, such as the 3GPP specifications, some proposals have been made to the effect that when Network Assisted Interference Cancellation and Suppression (NAICS) is implemented the user equipment or user device shall report two channel quality indicator values, one assuming that interference can be suppressed or cancelled as a result of the NAICS signaling and the other assuming that no NAICS signaling is provided. However, such dual CQI reporting would double the CQI reporting overhead and would not necessarily be useful.

### SUMMARY

This summary is provided to introduce concepts related to the transmission of information representative of the quality of a propagation channel between at least two devices of a telecommunication network.

In one implementation, a method for transmitting information representative of a quality of a propagation channel between at least two devices of a telecommunication network, the said method comprises a step of deriving a first channel quality indicator, a step of deriving a second channel quality indicator. This step of deriving a second channel quality indicator is realized by using a look-up table, the said look-up table links modulation scheme and/or transport block size and/or signal to interference plus noise ratio with an information representative of an target error rate and by comparing an actual error rate with the information representative of an target error rate. The method also comprises a step of transmitting the first and/or second channel quality indicators.

In another implementation a user device is described. This user device comprises at least one transmission means, at least one processor and at least one memory coupled to the processor. The memory comprises a calculation module configured to do a first derivation of a first channel quality indicator, and to do a second derivation of a second channel quality indicator. The said second derivation is realized by using a look-up table, the said look-up table links modulation scheme and/or transport block size and/or signal to interference plus noise ratio with an information representative of an target error rate and by comparing an actual error rate with the information representative of an target error rate. The transmission means being configured to transmit the first and/or second channel quality indicators.

In another implementation a base station is described. This base station comprises at least one transmission means, at least one processor and at least one memory coupled to the processor. The memory comprises a calculation module configured to do a first derivation of a first channel quality indicator, and to do a second derivation of a second channel quality indicator. The said second derivation is realized by using a look-up table, the said look-up table links modulation scheme and/or transport block size and/or signal to interference plus noise ratio with an information representative of an target error rate and by comparing an actual error rate with the information representative of an target error rate. The transmission means being configured to transmit the first and/or second channel quality indicators.

In another implementation a computer-readable medium is described. This computer-readable medium has embodied thereon a computer program for executing a method for transmitting information representative of a quality of a propagation channel between at least two devices of telecommunication network. The method comprises a step of deriving a first channel quality indicator a step of deriving a second channel quality indicator. This step of deriving a second channel quality indicator is realized by using a look-up table, the said look-up table links modulation scheme and/or transport block size and/or signal to interference plus noise ratio with an information representative of an target error rate and by comparing an actual error rate with the information representative of an target error rate. The method also comprises a step of transmitting the first and/or second channel quality indicator.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates a first exemplary method for transmitting propagation channel quality indicator.
Figure 2 illustrates a second exemplary method for transmitting propagation channel quality indicator.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Within the 3GPP specification the definition of CQI is to satisfy the condition that a single transport block belonging to the Physical Downlink Shared Channel PDSCH transmitted with a combination of modulation scheme and transport block size corresponding to the CQI index, and occupying a group of downlink physical resource blocks termed the CSI reference resource, could be received with a transport block error probability not exceeding 0.1. The principle behind this definition is that the user equipment best knows its own receiver performance, and can therefore take any relevant factors into account in deriving the CQI value to report. These factors can include any interference suppressing or cancelling capabilities. The CQI definition therefore naturally takes care of any assistance information that may be available, including information about interference and any other assistance signaling that might be provided in the case of NAICS.

If the CQI value according to the above definition were to be the only information fed back to the network when network assistance information was signaled, it would be challenging for the network to decide how to configure the network assistance signaling. For example, the network would not easily be able to identify:
- What benefit was being provided by the network assistance signaling.
- Whether the costs in terms of scheduling constraints in interfering cells was worthwhile.
- How the network assistance signaling parameter values could usefully be modified or what the gain/loss of such modifications might be.

In an embodiment two separate CQI values based on different interference suppression assumptions are transmitted each time CQI is reported. However this mechanism, needed to help the network to make such assessments and adjustments, has a high overhead because of this double reporting.

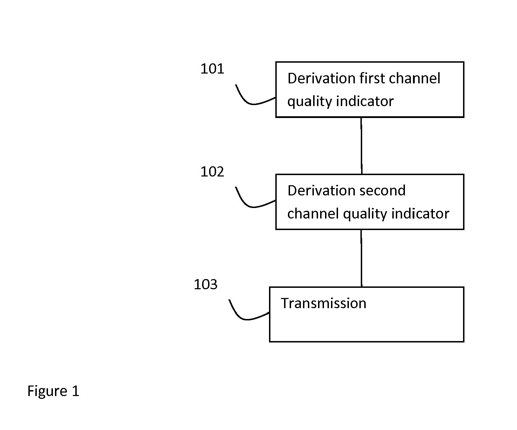

The figure 1 presents an embodiment of the present subject matter. This method comprises:
- a step 101 of deriving a first channel quality indicator,
- a step 102 of deriving a second channel quality indicator;
This step 102 is realized by using a look-up table. The aim of this look-up table is to link modulation scheme and/or transport block size and/or signal to interference plus noise ratio with information representative of a target error rate. This step 102 is also realized by comparing an actual error rate with the information representative of a target error rate.

The method finally comprises a step 103 of transmitting the first and/or second channel quality indicator.

The sets constituted of a modulation scheme and/or a transport block size and/or a signal to interference plus noise ratio are classified, within the look up table, by data rate. A set with a higher data rate is placed above a set with a lower data rate.

In order to derive the first channel quality indicator we can in an exemplary embodiment derive an estimate of a supportable data rate and/or supportable Modulation and Coding Set. By supportable data rate and/or Modulation and Coding Set we mean a data rate and/or Modulation which lead to an error rate or block error rate below a given threshold. This given threshold is set in an embodiment to a block error rate of 10%. In order to do this derivation different assumptions or information may also be taken into account such as the instantaneous processing or memory capabilities of the user equipment, and channel properties such as its rank and/or sub-band frequency.

In order to derive the first channel quality indicator, we can in another exemplary embodiment derive this first channel quality indicator as being an indication of a modulation scheme and/or transport block size at a target error rate by measuring interference before processing of said interference signal using said information about at least one parameter.

In other words, this method proposes, at a first node or network device, transmitting an indicator of a channel quality measurement for reception of a data packet at the first node, comprising at the first node receiving signaling information indicating parameters of an interfering signal, deriving a first channel quality indicator using said signaling information, further deriving a second channel quality indicator without using said signaling information where the second channel quality indicator is represented differentially with respect to the first channel quality indicator, and transmitting the first and second channel quality indicators to a second node, wherein updates of the second channel quality indicator are transmitted less often than updates of the first channel quality indicator.

In an embodiment the step 102 of deriving a second channel quality indicator is also configured to estimate the actual error rate by comparing the number of packets successfully decoded after interference suppression/cancellation with the number of packets not successfully decoded after interference suppression/cancellation and/or if the actual error rate is less than the target error rate, derive the second channel quality indicator as being a modulation scheme and transport block size that is higher in the look-up table as the one currently used by the network device and/or
if the actual error rate is more than the target error rate, derive the second channel quality indicator as being the modulation scheme and transport block size currently previously reported by the network device.

In other words, the step 102 of deriving a second channel quality indicator is realized by using a look-up table that may typically provide the modulation scheme and transport block size (a.k.a. a CQI index) that is expected to be decodable with error rate less than 10% for a given Signal to Interference plus Noise Ratio SINR. The knowledge of the efficacy of interference suppression/cancellation may be gathered over time by evaluating the number of packets successfully decoded after interference suppression/cancellation compared to the number of packets not successfully decoded after interference suppression/cancellation, and comparing it to the value used for the look-up table (namely 10% in this example); if the evaluated error rate is less than 10%, the user equipment adjusts its conventional CQI report by an amount to bring the actual error rate closer to 10%. This adjustment is made by choosing a modulation scheme and transport block size that is higher than the one obtained from the look-up table. Generally the modulation scheme and transport block size just above is chosen.

In an embodiment the target error rate is set to be a block error rate of 10%.

In an embodiment the step 102 of deriving the second channel quality indicator is also configured to represent the second channel quality indicator differentially with respect to the first channel quality indicator and/or the step of transmitting is also configured to transmit the second channel quality indicator less often than the first channel quality indicator.

In an embodiment the step 101 of deriving a first channel quality indicator is also configured to average several first channel quality indicator over a first time slot and/or the step 102 of deriving a second channel quality indicator is also configured to averaging several second channel quality indicator over a second time slot the said second time slot being longer than the said first time slot.

In other words, the step 101 of deriving a first channel quality indicator is also configured to estimate a first channel quality over a first time period and/or the step 102 of deriving a second channel quality indicator is also configured to estimate a second channel quality over a second time period the said second time period being longer than the said first time period.

In an embodiment the step 101 of deriving a fsirst channel quality indicator is also configured to select an index to at least one channel quality indicator value and the step 102 of deriving a second channel quality indicator is also configured to estimate a difference from this index. In other word in this embodiment a difference indicator is derived and sent.

In an embodiment the step 102 of deriving a second channel quality indicator is also configured to estimate an error rate and/or a difference in error rate.

In an embodiment the step 102 of deriving a second channel quality indicator is also configured to estimate an amount of interference which would not have been suppressed or cancelled without using the signaling information.

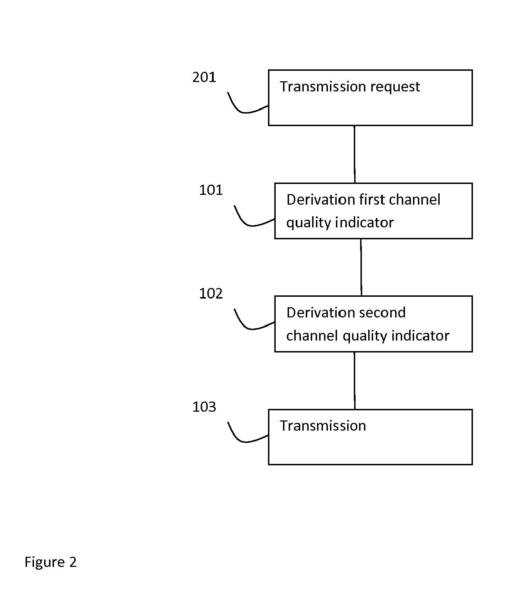

The figure 2 presents another embodiment in which the method also comprises an initial step (201) of receiving a request for transmission of the first channel quality indicator and/or the second channel quality indicator.

In an embodiment the method also comprise an initial step of receiving information about at least one parameter of an interference signal.

In an embodiment the step 103 of transmitting is also configured to transmit periodically the second channel quality indicator with an associated period longer than the periodicity associated to the transmission of the first channel quality indicator.

In an embodiment the step 103 of transmitting is also configured to transmit the second channel quality indicator when this second channel quality indicator is exceeded a threshold.

In an embodiment the step 103 of transmitting is also configured to transmit the second channel quality indicator when a predetermined number of data packets are received by a network or user device.

In an embodiment the step 103 of transmitting is also configured to transmit the second channel quality indicator after a predetermined time has elapsed since the previous transmission of the second channel quality indicator.

In other words the method introduces a NAICS Efficiency Indicator that is sent from the user equipment to the network that tells the network how effective the current NAICS configuration is. The method object of the present subject matter uses two separate approaches:
- In addition to conventional CQI reporting according to the current definition (which may already take into account interference suppression capabilities and resulting demodulation performance enhancements), when signaling is configured from the network to the user equipment to assist the user equipment with interference suppression/cancellation the user equipment transmits an indicator of how much lower the performance would have been during a certain past time window if at least one aspect of the network assistance signaling had not been provided, where the update rate of the said indicator is significantly lower than the update rate of the conventional CQI reporting. Due to the low update rate, the overhead of transmitting this indicator would be much lower than the overhead of the conventional CQI Reporting.

This "indicator of how much lower the performance would have been if the network assistance signaling had not been provided" would be a non-obvious derivation of the delta-CQI proposed for Multi-User Multiple Input Multiple Output (MU-MIMO) or for Coordinated Multipoint (CoMP) for the following reasons:
The delta-CQI, proposed for MU-MIMO, provides an indication of the difference in CQI due to the presence or absence of interfering transmissions, for example between a rank 1 transmission and a rank n transmission, and in the case of CoMP this delta-CQI provides an indication of the difference between interfering cells being muted or not; whereas the difference indicator of the present subject matter assumes the presence of interference, and provides an indication of the difference in CQI due to the presence or absence of network signaling to enable improved processing (cancellation or suppression) of the interference at the user equipment.
The delta-CQI, proposed for MU-MIMO or CoMP, is designed to assist the dynamic (i.e. per sub frame) scheduling decisions at the network (including selection of user equipments transmission modes for the selected user equipment, and user equipment-pairing in case of MU-MIMO operation), and therefore needs to be provided as often as any conventional CQI report in order to be useful. By contrast, the difference indicator of the present subject matter is designed to enable the network to decide semi-statically whether or not to provide network assistance signaling to the user equipments; since this signaling should be valid for multiple sub frames, this difference indicator can be provided significantly less often than prior art delta CQI reports, and this fact can therefore be exploited to reduce the overhead compared to prior art delta CQI reports.
The delta-CQI, proposed for MU-MIMO or CoMP, can be derived by means of two separate CQI estimates derived on the same sub frame using different assumptions about the transmission rank, whereas the difference indicator of the present subject matter typically requires a longer term statistical operation since the presence or absence of network assistance signaling will affect the overall probability of the user equipment being able to cancel or suppress the interference. This is elaborated further in the embodiments below.

In an embodiment of the present subject matter at least one of the network devices provides signaling, in the downlink direction, indicating information about an interference signal. The at least one network device can change the amount or content of the information, including for example switched off the signaling entirely or changing the set of possible values of parameters of interfering signals. A network device would evaluate the reported CQI as a way to determine if the level of signaling support can be reduced or increased. The network device would observe the impact on the CQI that results from changing the provided information. In the case of so called 3GPP Release 11 network, this embodiment has no impact on the user equipment since the user equipment would continue to report the normal CQI without reference to the different levels of information about interfering transmissions.

In embodiments of the present subject matter, the difference indicator of the present subject matter may comprise:
an estimated average (negative) delta to the reported conventional CQI values;
an estimated instantaneous (negative) delta to the most recently reported conventional CQI value;
an estimated block error rate (BLER) or an increase in BLER relative to the 10% threshold;
an estimated amount of interference, which would not have been suppressed or cancelled;
The estimate may be derived over a signaled or preconfigured or specified historical time window.

In embodiments of the present subject matter, the difference indicator of the present subject matter may be sent:
upon request signaling (either layer 1 signaling or higher layer signaling) being received by the user equipment from an equipment of the network, for example the base station;
periodically with a period configured by one element of the network which is in any case lower than the period of the conventional CQI reporting;
when triggered by the value of the estimate CQI crossing a threshold;
after a certain number of scheduled data packets;
after a certain elapsed time;

In an embodiment, if no data packets have been received by the user equipment since the last transmission of the indicator, the user equipment could report a zero value of the indicator, or a special "not applicable" value.

In an embodiment the difference indicator of the present subject may be reported for the same or different configurations as the conventional CQI. For example, conventional CQI reporting can comprise wideband CQI, sub-band CQI and spatial differential CQI. Instances of the indicator may be sent with wideband and/or sub-band and/or spatial attributes. In the case of sub-band indicators being sent, the indicators may in some embodiments correspond only to subbands for which network assistance signaling is configured.

In an embodiment the difference indicator of the present subject matter may relate to the availability or unavailability of one or more parts of the network assistance information. For example, if the network assistance information comprises two different parameters (e.g. a constraint on the interfering modulation scheme(s) and a constraint on the interfering transmission mode(s)), the user equipment may provide indicators corresponding to the non-availability of either one or both of the parameters.

In an embodiment the difference indicator of the present subject matter may be sent by physical layer or higher layer signaling messages. Advantageously, the indicator may be sent in a higher-layer Radio Resource Control (RRC) message.

In another embodiment, the indicator may comprise a CQI value derived according to an assumption that the network assistance signaling was not provided. The different CQI reports are configured via "CSI process configurations", where one CSI process configuration includes the identity of the resource elements to be measured for the channel and interference parts of the CSI measurement, together with information about the periodicity of reporting.

In an embodiment, the CSI process configuration may be modified to include whether the user equipment shall assume the availability of the network assistance signaling or not when deriving the CQI reports for that CSI process; in this case, a CSI process associated with the assumption that the network assistance signaling is not provided shall have a lower periodicity (or be non periodic) than a CSI process associated with the assumption that the network assistance signaling is provided and used.

A variety of user equipment or user device implementations may be envisaged for the algorithm to derive the second channel quality indicator.

In another embodiment, the conventional CQI reports taking into account the presence of network assistance signaling are derived according to a stored look-up table from measured SINR values, adjusted by prior knowledge of the efficacy of interference suppression/cancellation based on the network assistance signaling.

As already explained above, the look-up table may typically provide the modulation scheme and transport block size (a.k.a. a CQI index) that is expected to be decodable with error rate less than 10% for a given SINR. The knowledge of the efficacy of interference suppression/cancellation may be gathered over time by evaluating the number of packets successfully decoded after interference suppression/cancellation compared to the number of packets not successfully decoded after interference suppression/cancellation, and comparing it to the value used for the look-up table (namely 10% in this example); if the evaluated error rate is less than 10%, the user equipment adjusts its conventional CQI report by an amount to bring the actual error rate closer to 10%. This process may be repeated. The indicator is derived as a byproduct of this process, by extracting the CQI estimates before the latter adjustment step, and averaging the difference between the extracted CQI estimates and the adjusted CQI estimates

In another embodiment, the user equipment may derive two independent CQI values, one derived from a stored look-up table that assumes the availability of the network assistance signaling and the other derived from a second stored look-up table that assumes the unavailability of the network assistance signaling. The user equipment may update the values in the second stored look-up table intermittently according to knowledge of the efficacy of interference suppression/cancellation gathered as described in the previous embodiment. The second channel quality indicator is derived as the average difference between the two independent CQI values.

An embodiment of the present subject matter comprises a user device or a user equipment. In an embodiment, the user device includes one or more processor(s), I/O interface(s), a memory coupled to the processor(s), transmission means and reception means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory. The reception means are configured to receive information about at least one parameter of an interference signal, and the transmission means are configured to transmit the first and/or second channel quality indicators.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The modules, included inside the memory of the user device, comprise
a calculation module configured to do a first derivation of a first channel quality indicator, and to do a second derivation of a second channel quality indicator;
the said second derivation is realized by using a look-up table, the said look-up table links modulation scheme and/or transport block size and/or signal to interference plus noise ratio with an information representative of an target error rate and
by comparing an actual error rate with the information representative of a target error rate.

An embodiment of the present subject matter comprises a base station. This base station includes one or more processor(s), I/O interface(s), a memory coupled to the processor(s) reception means and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory. The reception means are configured to receive information about at least one parameter of an interference signal, and the transmission means are configured to transmit the first and/or second channel quality indicators.

As previously explained, the functions realized by the processors may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

As previously explained, the memories may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The modules, included inside the memory of the base station, comprise
a calculation module configured to do a first derivation of a first channel quality indicator, and to do a second derivation of a second channel quality indicator;
the said second derivation is realized by using a look-up table, the said look-up table links modulation scheme and/or transport block size and/or signal to interference plus noise ratio with an information representative of an target error rate and
by comparing an actual error rate with the information representative of a target error rate.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method for transmitting information representative of a quality of a propagation channel between at least two devices of telecommunication network, described in figure 1 or figure 2 can be performed by programmed computers. This method comprises;
- a step 101 of deriving a first channel quality indicator,
- a step 102 of deriving a second channel quality indicator;
   by using a look-up table, the said look-up table links modulation scheme and/or transport block size and/or signal to interference plus noise ratio with an information representative of an target error rate and
   by comparing an actual error rate with the information representative of an target error rate,
a step 103 of transmitting the first and/or second channel quality indicator.

## Claims

1. A method for transmitting information representative of a quality of a propagation channel between at least two devices of a telecommunication network, the said method comprises;
a step (101) of deriving a first channel quality indicator,
a step (102) of deriving a second channel quality indicator;
by using a look-up table, the said look-up table links modulation scheme and/or transport block size and/or signal to interference plus noise ratio with an information representative of an target error rate and
by comparing an actual error rate with the information representative of an target error rate,
a step (103) of transmitting the first and/or second channel quality indicators.

2. The method according to claim 1 wherein the step ( 102) of deriving a second channel quality indicator is also configured to estimate the actual error rate by comparing a number of data packets successfully decoded to a number of data packets not successfully decoded and/or
if the actual error rate is less than the target error rate, derive the second channel quality indicator as being a modulation scheme and/or transport block size that is above in the look-up table as the one currently used by the network device and/or
if the actual error rate is more than the target error rate, derive the second channel quality indicator as being the modulation scheme and/or transport block size currently used by the network device.

3. The method according to any of the previous claims wherein;
the step (102) of deriving the second channel quality indicator is also configured to represent the second channel quality indicator differentially with respect to the first channel quality indicator and/or
the step (103) of transmitting is also configured to transmit the second channel quality indicator less often than the first quality estimation.

4. The method according to any of the previous claims, wherein
the step (101) of deriving a first channel quality indicator is also configured to averaging several first channel quality indicator over a first time slot and/or;
the step (102) of deriving a second channel quality indicator is also configured to averaging several second channel quality indicator over a second time slot the said second time slot being longer than the said first time slot.

5. The method according to any of the previous claims, wherein
the step (101) of deriving a first channel quality indicator is also configured to select an index to at least one channel quality indicator value and
the step (102) of deriving a second channel quality indicator is also configured to estimate a difference from this index.

6. The method according to any of the previous claims, wherein;
the step (102) of deriving a second channel quality indicator is also configured to estimate an error rate and/or a difference in error rate.

7. The method, according to any of the previous claims, also comprises
an initial step (201) of receiving a request for a transmission of the first channel quality indicator and/or the second channel quality indicator.

8. The method according to any of the previous claims, wherein;
the step (103) of transmitting is also configured to transmit periodically the second channel quality indicator with an associated period longer than the periodicity associated with the transmission of the first channel quality indicator.

9. The method according to any of the previous claims, wherein;
the step (103) of transmitting is also configured to transmit the second channel quality indicator when a value of this second channel quality indicator exceeds a threshold.

10. The method according to any of the previous claims, wherein;
the step (103) of transmitting is also configured to transmit the second channel quality indicator when a predetermined number of data packets have been received by a network or user device.

11. The method according to any of the previous claims, wherein;
the step (103) of transmitting is also configured to transmit the second channel quality indicator after a predetermined time has elapsed since the previous transmission of the second channel quality indicator.

12. A user device comprising
at least one transmission means,
at least one processor; and
at least one memory coupled to the processor, the memory comprises:
a calculation module configured to do a first derivation of a first channel quality indicator, and to do a second derivation of a second channel quality indicator;
the said second derivation is realized by using a look-up table, the said look-up table links modulation scheme and/or transport block size and/or signal to interference plus noise ratio with an information representative of an target error rate and
by comparing an actual error rate with the information representative of an target error rate,
the transmission means being configured to transmit the first and/or second channel quality indicators.

13. A base station comprising
at least one transmission means,
at least one processor; and
at least one memory coupled to the processor, the memory comprises:
a calculation module configured to do a first derivation of a first channel quality indicator, and to do a second derivation of a second channel quality indicator;
the said second derivation is realized by using a look-up table, the said look-up table links modulation scheme and/or transport block size and/or signal to interference plus noise ratio with an information representative of an target error rate and
by comparing an actual error rate with the information representative of an target error rate,
the transmission means being configured to transmit the first and/or second channel quality indicators.

14. A computer-readable medium having embodied thereon a computer program for executing a method for transmitting information representative of a quality of a propagation channel between at least two devices of telecommunication network, the method comprises;
a step (101) of deriving a first channel quality indicator,
a step (102) of deriving a second channel quality indicator;
by using a look-up table, the said look-up table links modulation scheme and/or transport block size and/or signal to interference plus noise ratio with an information representative of an target error rate and
by comparing an actual error rate with the information representative of an target error rate,
a step (103) of transmitting the first and/or second channel quality indicator.
